# EUROPÄISCHE PATENTSCHRIFT

(11) **EP 3 976 438 B1**
(45) Veröffentlichungstag und Bekanntmachung des Hinweises auf die Patenterteilung: **01.10.2025**
(21) Anmeldenummer: 20735077.8
(22) Anmeldetag: 15.06.2020
(51) Int. Cl.: G01L 1/26, B61L 1/16, G01L 1/24

(54) **SENSOREINRICHTUNG UND VERFAHREN FÜR EINE EISENBAHNTECHNISCHE ANLAGE**
SENSOR DEVICE AND METHOD FOR A RAILWAY SYSTEM
DISPOSITIF DE DÉTECTION POUR INSTALLATION FERROVIAIRE ET PROCÉDÉ

(30) Priorität: 15.07.2019 DE 102019210401
(43) Veröffentlichungstag der Anmeldung: 06.04.2022
(73) Patentinhaber: Siemens Mobility GmbH, 81739 München (DE)
(72) Erfinder: DELMAS, Remy, 10439 Berlin (DE); TRÜMPER, Ulf, 38302 Wolfenbüttel (DE)
(74) Vertreter: Siemens Patent Attorneys
(86) Internationale Anmeldenummer: PCT/EP2020/066444
(87) Internationale Veröffentlichungsnummer: WO 2021/008791

(56) Entgegenhaltungen:
- EP-A1- 3 069 952
- WO-A1-2014/134713
- WO-A1-2018/017111

## Beschreibung

Die Erfindung betrifft eine Sensoreinrichtung für eine eisenbahntechnische Anlage mit wenigstens einem zur Leitung von Licht geeignetem Faserelement, das wenigstens einen zur Reflexion von Licht mit einem ersten Frequenzbereich ausgebildeten Bragg Spiegel aufweist, mit wenigstens einer Lichtquelleneinrichtung, die zum Einleiten von Licht des ersten Frequenzbereichs in das wenigstens eine Faserelement ausgebildet ist, und mit wenigstens einer Detektoreinrichtung, die zum Erfassen von reflektiertem Licht ausgebildet ist.

Die Erfindung betrifft weiterhin ein Verfahren zum Erfassen von Informationen in einer eisenbahntechnischen Anlage, bei dem Licht wenigstens eines ersten Frequenzbereichs in wenigstens ein Faserelement eingeleitet wird, wobei das Faserelement für die Leitung von Licht geeignet ist und wenigstens einen zur Reflexion von Licht mit dem ersten Frequenzbereich ausgebildeten Bragg Spiegel aufweist, und bei dem von dem Faserelement reflektiertes Licht erfasst wird.

Derartige Sensoreinrichtungen und Verfahren sind aus dem Stand der Technik bekannt und beispielsweise in der EP 3 069 952 A1 beschrieben. Darin wird die beschriebene Sensoreinrichtung mit dem Faserelement und dem darin ausgebildeten Bragg-Spiegel zur Achszählung eines Schienenfahrzeuges verwendet. Andere Positionssensoren für Schienenfahrzeuge sind beispielsweise aus der WO 2018/019878 A1 bekannt, in der zusätzlich auch noch ein faseroptischer Sensor (Fiber Optic Sensor) verwendet wird, um unterschiedliche Ereignisse entlang der Schiene zu erfassen.

Die bekannten Verfahren und Vorrichtungen sind allerdings recht aufwendig.

Es ist daher die Aufgabe der vorliegenden Erfindung, eine gegenüber dem Stand der Technik vereinfachte Sensoreinrichtung und ein entsprechendes Verfahren der eingangs genannten Art bereitzustellen.

Erfindungsgemäß wird die Aufgabe durch den Gegenstand der unabhängigen Patentansprüche gelöst.

Bei der erfindungsgemäßen Sensoreinrichtung gilt dabei zusätzlich, dass die wenigstens eine Lichtquelleneinrichtung zum Einleiten von Licht mit wenigstens einem zweiten Frequenzbereich ausgebildet ist, der für Fiber Optic Sensing geeignet ist.

Bei dem erfindungsgemäßen Verfahren geschieht dies dadurch, dass zusätzlich Licht mit wenigstens einem zweiten Frequenzbereich eingeleitet wird, der für Fiber Optic Sensing geeignet ist.

Erfindungsgemäß wird also in das gleiche Faserelement Licht des ersten Frequenzbereichs und auch des zweiten Frequenzbereichs eingeleitet. Das Licht des ersten Frequenzbereichs ist dabei für den verwendeten Bragg-Spiegel geeignet und das Licht des zweiten Frequenzbereichs für die Anwendung von Fiber Optic Sensing.

Der Bragg-Spiegel, der auch als Bragg-Gitter oder DBR - Distributed Bragg Reflector - bezeichnet wird, ist ein im Faserelement ausgebildeter Reflektor, der eingeleitetes Licht mit einem geeigneten Frequenzbereich sehr gut reflektiert. Das in das Faserelement, das auch als Lichtwellenleiter bezeichnet werden könnte, eingeleitete Licht des ersten Frequenzbereichs wird am Ort des Bragg-Spiegels von diesem sehr gut reflektiert. Mechanische Veränderungen des Faserelements im Bereich des Bragg-Spiegels führen zu einer Veränderung des reflektierten Lichts, die sehr gut detektierbar ist.

Beim Fiber Optic Sensing wird Licht des zweiten Frequenzbereichs in das Faserelement eingeleitet und von diesem ein gewisser Anteil an jeder Stelle reflektiert. Man spricht auch von einer Rückstreuung (back scatting) des Lichts durch die eigene innere Struktur des Faserelements. Diese Rückstreuung findet ausgehend von der Lichtquelle an jeder Stelle des Faserelements bis zu etwa 40 Kilometer weit statt. Kleinste mechanische Veränderungen des Faserelements, die beispielsweise durch akustische Wellen ausgelöst werden können, sind im rückgestreuten Licht zu erkennen. Solche akustischen Wellen werden beispielsweise durch einen vorbeifahrenden Zug oder Personen im Gleis ausgelöst.

Durch die erfindungsgemäße Sensoreinrichtung und das erfindungsgemäße Verfahren können sowohl eine Sensorik an der Stelle des wenigstens einen Bragg-Spiegels aufgebaut werden als auch eine Sensorik auf der gesamten Länge des Faserelements. Es entsteht somit eine vereinfachte Sensoreinrichtung, die vielseitig einsetzbar ist.

Da die erfindungsgemäße Lichtquelleneinrichtung Licht der unterschiedlichen Frequenzbereiche in das Faserelement einleitet, kann das reflektierte Licht von der erfindungsgemäßen Detektoreinrichtung genau zugeordnet und ausgewertet werden, ob es vom Bragg-Spiegel reflektiert oder vom Lichtwellenleiter gemäß Fiber Optic Sensing reflektiert wurde. Auch wenn hier Frequenzbereich genannt ist, kann das Licht für Fiber Optic Sensing auch nur eine einzige ganz bestimmte Frequenz aufweisen.

Der Begriff Fiber Optic Sensing ist allgemein bekannt und kann alternativ auch als Distributed Acoustic Sensing bezeichnet werden.

Die erfindungsgemäße Lösung kann durch vorteilhafte Ausgestaltungen weiterentwickelt werden, die im Folgenden beschrieben sind.

Die erfindungsgemäße Sensoreinrichtung weist wenigstens einen mit dem wenigstens einen Bragg-Spiegel verbundenen Permanentmagneten auf, der so im Bereich einer Schiene der eisenbahntechnischen Anlage anbringbar ist, dass sich der Permanentmagnet durch eine Vorbeibewegung eines Rades eines Fahrzeugs der eisenbahntechnischen Anlage mechanisch verändert. Dies hat den Vorteil, dass ein im Bereich des Bragg-Spiegels vorbeifahrendes Rad besonders gut detektierbar ist, weil das aus Stahl bestehende Rad einen Einfluss auf den Permanentmagneten und dadurch auf den Bragg-Spiegel hat. Durch die Verwendung des Permanentmagneten ist die Wirkung des Rades auf den Bragg-Spiegel somit verstärkt und dadurch besser detektierbar. Hierzu wird auch auf die deutsche Patentanmeldung mit dem Anmeldeaktzenzeichen 10 2019 204 331.3 Bezug genommen, die hier vollständig enthalten sein soll.

Um auf einfache Weise eine Fahrtrichtung des vorbeifahrenden Rades detektieren zu können, kann das Faserelement wenigstens zwei in einer Längsrichtung des Faserelements hintereinander angeordnete Bragg Spiegel aufweisen. Je nach Fahrtrichtung wird zunächst der eine Bragg-Spiegel und anschließend der andere Bragg-Spiegel das Rad detektieren, wodurch auf die Fahrtrichtung geschlossen werden kann.

In einer vorteilhaften Ausgestaltung können sich die wenigstens zwei Frequenzbereiche nicht überlagern und einen Abstand zueinander aufweisen. Dies hat den Vorteil, dass so die reflektierten Signale leichter unterscheidbar sind.

Ferner kann die Lichtquelleneinrichtung zum synchronisierten Einleiten von Licht der zwei Frequenzbereiche ausgebildet sein. Dies bedeutet, dass beispielsweise zunächst das Licht des ersten Frequenzbereichs für einen bestimmten Zeitraum in das Faserelement eingeleitet wird und anschließend das Licht des zweiten Frequenzbereichs ebenfalls zu einem bestimmten Zeitraum und danach wieder das Licht des ersten Frequenzbereichs und so weiter. Dies hat den Vorteil, dass die beiden Frequenzbereiche stärker voneinander isoliert sind und bei der Detektion immer nur eine der verschiedenen Sensorarten ausgewertet werden muss. Diese Ausführungsform stellt allerdings nur eine Alternative dar. Grundsätzlich ist auch die gleichzeitige Aussendung von Licht der beiden Frequenzbereiche in jedem Fall möglich und sinnvoll.

In einer vorteilhaften Ausgestaltung kann die Lichtquelleneinrichtung wenigstens zwei Lichtquellen aufweist, wobei die eine Lichtquelle für die Einleitung von Licht des ersten Frequenzbereichs und die andere Lichtquelle für die Einleitung von Licht des zweiten Frequenzbereichs ausgebildet ist. Dies hat den Vorteil, dass zwei unterschiedliche Lichtquellen verwendet werden können. Alternativ kann aber auch nur eine Lichtquelle verwendet werden, die für die Erzeugung von Licht in beiden Frequenzbereichen geeignet ist. Dies ist platzsparender, aber gegebenenfalls auch kostenintensiver.

Um die Auswertung des reflektierten Lichts zu vereinfachen, kann die Sensoreinrichtung wenigstens zwei Detektoreinrichtungen aufweist, wobei die eine Detektoreinrichtung für das Erfassen von Licht des ersten Frequenzbereichs und die andere Detektoreinrichtung für das Erfassen von Licht des zweiten Frequenzbereichs ausgebildet ist. Alternativ kann aber auch eine einzige Detektoreinrichtung verwendet werden, die für das Erfassen von Licht in beiden Frequenzbereichen ausgebildet ist. Auch dies kann platzsparender, jedoch kostenintensiver sein.

Um die erfindungsgemäße Sensoreinrichtung für die Verwendung in einer sicherheitskritischen Anlage zu optimieren, kann diese zur Ausgabe von wenigstens zwei unterschiedlichen Ausgangssignalen ausgebildet sein, wobei das eine Ausgangssignal für sicherheitsrelevante Informationen und das andere Ausgangssignal für nicht-sicherheitsrelevante Informationen ausgebildet ist. Dadurch kann die Weiterverarbeitung der Ausgangssignale beispielsweise vereinfacht werden, da sicherheitsrelevante Informationen häufig sehr viel aufwendiger verarbeitet werden müssen als nicht-sicherheitsrelevante Informationen. Durch diese Ausführungsform können die nichtsicherheitsrelevanten Informationen auf einfachere Weise weiterverarbeitet werden. Beispielsweise können die mit Hilfe des Bragg-Spiegels detektierten Räder eines Schienenfahrzeugs sicherheitsrelevante Informationen darstellen und die über Fiber Optic Sensing gewonnenen Informationen nicht sicherheitsrelevante Informationen.

Um die erfindungsgemäße Sensoreinrichtung weiter zu vereinfachen, können die Lichtquelleneinrichtung und die Detektoreinrichtung in einem gemeinsamen Gehäuse integriert ausgebildet sein.

Schließlich betrifft die Erfindung auch eine eisenbahntechnische Anlage mit den Merkmalen des Anspruchs 9 Um die eisenbahntechnische Anlage zu vereinfachen, kann vorgesehen sein, dass die Sensoreinrichtung nach einer der zuvor beschriebenen Ausführungsformen ausgebildet ist.

Im Folgenden wird die Erfindung mit Bezug auf die beigefügten Zeichnungen erläutert.

Es zeigen:
- Fig. 1: eine schematische Darstellung einer ersten beispielhaften Ausführungsform einer erfindungsgemäßen eisenbahntechnischen Anlage mit einer erfindungsgemäßen Sensoreinrichtung;
- Fig. 2: eine schematische Darstellung einer weiteren beispielhaften Ausführungsform der erfindungsgemäßen Sensoreinrichtung;
- Fig. 3: eine schematische Darstellung einer Frequenzverteilung von ausgesendetem Licht der erfindungsgemäßen Sensoreinrichtungen gemäß der Figuren 1 und 2;
- Fig. 4: eine schematische Darstellung von synchronisiert eingeleiteten Licht der erfindungsgemäßen Sensoreinrichtung nach den Ausführungsformen der Figu-ren 1 und 2.

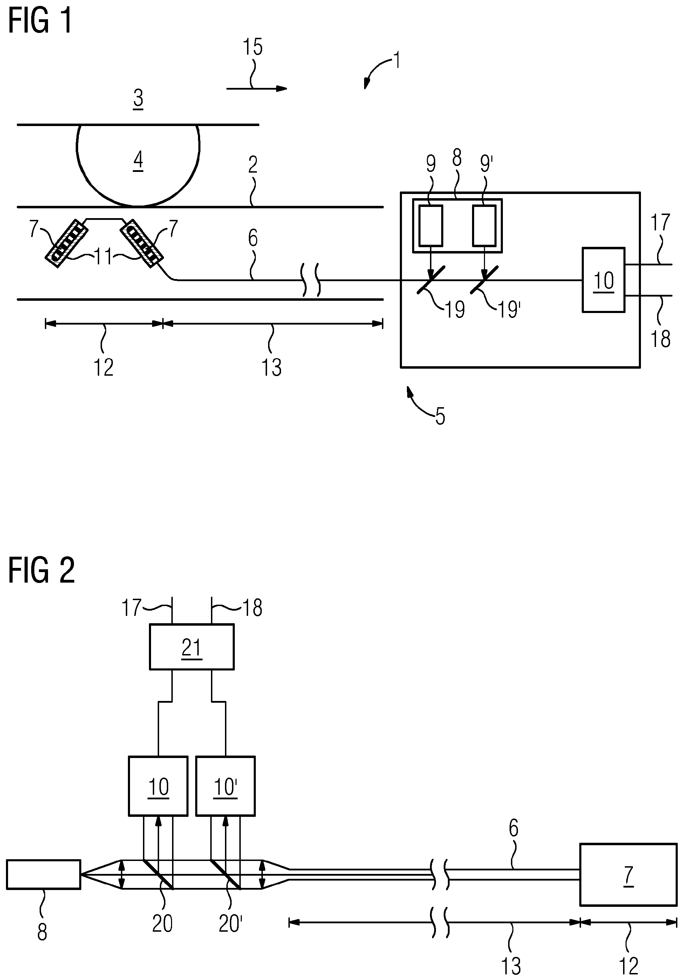

Figur 1 zeigt eine beispielhafte Ausführungsform einer erfindungsgemäßen eisenbahntechnischen Anlage 1 mit einem aus Fahrschienen 2 gebildeten Streckennetz mit Schienenfahrzeugen 3, die sich in dem Streckennetz bewegen. Dabei bewegen sich Räder 4 der Schienenfahrzeuge 3 in bekannter Weise entlang der Fahrschienen 2. Die eisenbahntechnische Anlage 1 umfasst weiterhin wenigstens eine Sensoreinrichtung 5, die unter anderem auch zum Detektieren des sich entlang der Fahrschiene 2 bewegenden Rades ausgebildet ist.

Die Sensoreinrichtung 5, in der in Figur 1 dargestellten beispielhaften Ausführungsform, umfasst wenigstens ein optisches Faserelement 6, das bei dieser Ausführungsform an einem Ende zwei integrierte Bragg-Spiegel 7 aufweist. Die Sensoreinrichtung 5 umfasst weiterhin wenigstens eine Lichtquelleneinrichtung 8, die bei der Ausführungsform in Fig. 1 zwei Lichtquellen 9 aufweist, die beispielsweise als Laser ausgebildet sein können. Weiterhin umfasst die Sensoreinrichtung 5 eine Detektoreinrichtung 10, die mit dem Faserelement 6 verbunden ist.

Bei der beispielhaften Ausführungsform in Figur 1 ist jeder Bragg-Spiegel 7 jeweils mit einem Permanentmagneten 11 verbunden. Die Permanentmagneten 11 sind jeweils so im Bereich der Fahrschiene 2 angeordnet, dass sich die Permanentmagneten jeweils durch eine Vorbeibewegung des Rades 4 mechanisch verändern. Die Verbindung des Faserelements 6 im Bereich der Bragg-Spiegel 7 mit Permanentmagneten 11 ist in der deutschen Patentanmeldung Nr. 10 2019 204 331.3 beschrieben, auf die hier Bezug genommen wird und die vollständig umfasst sein soll.

Das Faserelement 6 der erfindungsgemäßen Sensoreinrichtung 5 ist in einem ersten Abschnitt 12 mit den zwei Bragg-Spiegeln 7 versehen, um ein vorbeifahrendes Rad 4 zu detektieren. In einem zweiten Abschnitt 13 verläuft das Faserelement 6 entlang der Fahrschiene 2, um Ereignisse mit Hilfe von Fiber Optic Sensing zu erfassen. Diese Ereignisse können beispielsweise die Position von einem vorbeifahrenden Schienenfahrzeug sein oder auch Personen, die sich berechtigt oder unberechtigt im Bereich der Fahrschienen 2 bewegen.

Im Betrieb der erfindungsgemäßen Sensoreinrichtung 5 wird durch die eine Lichtquelle 9 der Lichtquelleneinrichtung 8 Licht in das Faserelement 6 über einen halbdurchlässigen Spiegel 19 eingeleitet. Dieses breitbandige Licht weist einen ersten Frequenzbereich 14 auf, der für die Bragg-Spiegel 7 geeignet ist. Die Bragg-Spiegel 7 reflektieren das Licht mit dem ersten Frequenzbereich 14 besonders gut und sind für diesen ersten Frequenzbereich ausgebildet. Das Licht wird durch das Faserelement 6 bis zu den Bragg-Spiegeln 7 geleitet und von diesen reflektiert. Das zurückgeworfene Licht wird von der Detektoreinrichtung 10 analysiert. Alternativ kann auch Licht eines dritten Frequenzbereichs erzeugt und eingeleitet werden, um Licht mit unterschiedlichen Frequenzbereichen zu den beiden Bragg-Spiegeln 7 zu senden.

Wenn sich im Betrieb der eisenbahntechnischen Anlage 1 das Rad 4 des Schienenfahrzeugs 3 in einer Fahrtrichtung 15 entlang der Fahrschiene 2 oberhalb von den Permanentmagneten 11 vorbeibewegt, bewegt sich das Rad hintereinander durch ein Magnetfeld von jedem Permanentmagneten 11. Das Rad 4 ist aus einem magnetisierbaren Metall, insbesondere aus Stahl, hergestellt und stellt daher einen magnetisierbaren Körper dar, der Einfluss auf ein Magnetfeld hat. Somit wird das Rad 4 von dem Permanentmagneten 11 angezogen bzw. abgestoßen. Da die Permanentmagneten 11 allerdings fest zur Fahrschiene 2 angeordnet sind und somit keine größeren Relativbewegungen zwischen dem Permanentmagneten 11 und dem Rad 4 stattfinden können, werden die Permanentmagneten 11 lediglich mechanisch verformt. Diese mechanische Veränderung der Permanentmagneten 11 ist daher ein Indiz für das vorbeifahrende Rad 4 des Schienenfahrzeugs 3. Diese Veränderung der Permanentmagneten 11 wird auf das Faserelement 6 im Bereich der Bragg-Spiegel 7 weitergegeben, die ebenfalls mechanisch verformt werden. Diese mechanische Verformung der Bragg-Spiegel 7 und des Faserelements 6 bedingt eine Veränderung des breitbandigen Lichts, das in dem Faserelement 6 durch die Bragg-Spiegel 7 zurückgeworfen wird. Daher ist die Vorbeibewegung des Rades 4 anhand einer Veränderung des zurückgeworfenen Lichts detektierbar. Diese Veränderung wird durch die Detektoreinrichtung 10 registriert, die dadurch das vorbeifahrende Rad 4 an der Stelle der Bragg-Spiegel 7 erkennt. Durch die zwei in der Fahrtrichtung 15 hintereinander angeordneten Bragg-Spiegel 7 kann die Fahrtrichtung 15 des Schienenfahrzeugs 3 ermittelt werden, da die Detektoreinrichtung 10 genau erkennen kann, von welchem Bragg-Spiegel 7 das zurückgeworfene Licht stammt. So ist die Fahrtrichtung ermittelbar.

Die zweite Lichtquelle 9' der Lichtquelleneinrichtung 8 erzeugt ebenfalls Licht und leitet dieses über den zweiten halbdurchlässigen Spiegel 19' in das Faserelement 6 ein. Allerdings ist das von der Lichtquelle 9' erzeugte Licht nicht breitbandig, sondern besonders schmalbandig. Dieses Licht weist vor allem eine bestimmte Frequenz bzw. einen zweiten engen Frequenzbereich 16 auf, der einen Abstand 17 zum ersten Frequenzbereich 14 aufweist. Dieses Licht mit dem zweiten Frequenzbereich 16 ist geeignet für Fiber Optic Sensing ausgebildet und wird von dem Faserelement 6 auch im zweitem Abschnitt 13 reflektiert bzw. rückgestreut. Dieses Prinzip ist auch unter dem Namen Distributed Acoustic Sensing (DAS) bekannt.

Dieses rückgestreute Licht wird bei der Ausführungsform in Figur 1 ebenfalls von der Detektoreinrichtung 10 ausgewertet. Alternativ kann auch eine weitere Detektoreinrichtung vorgesehen sein, die speziell für die Auswertung von dem rückgestreuten Licht der Lichtquelle 9' ausgebildet ist.

Bei der Ausführungsform in Fig. 1 ist die Sensoreinrichtung 5 zur Ausgabe von zwei unterschiedlichen Ausgangssignalen 17, 18 ausgebildet, wobei das eine Ausgangssignal 17 für sicherheitsrelevante Informationen, wie beispielsweise die Information über das erkannte Rad 4, und das andere Ausgangssignal 18 für nicht-sicherheitsrelevante Informationen, wie beispielsweise per Fiber Optic Sensing ermittelte Personen im Bereich der Fahrschiene 2, ausgebildet sind.

Im Folgenden wird die in Figur 2 dargestellte beispielhafte Ausführungsform der erfindungsgemäßen Sensoreinrichtung beschrieben. Der Einfachheit halber wird lediglich auf die Unterschiede zu der ausführungsform in Figur 1 eingegangen.

Im Unterschied zu der Ausführungsform in Figur 1 ist die Lichtquelleneinrichtung 8 quasi direkt mit dem Faserelement 6 verbunden und muss das erzeugte Licht nicht über einen Spiegel in das Fahrzeugelement einleiten. Dafür wird bei der ausführungsform in Figur 2 das reflektierte Licht durch halbdurchlässige Spiegel 20, 20' aus dem Faserelement 6 ausgeleitet und von zwei unterschiedlichen Detektoreinrichtungen 10, 10' ausgewertet. Dabei sind der Spiegel 20 und die Detektoreinrichtung 10 für die Auswertung des Fiber Optic Sensing Signals ausgebildet und der Spiegel 20' und die Detektoreinrichtung 10' für die Auswertung des vom Bragg-Spiegel 7 zurückgeworfenen Licht. In einer Weiterverarbeitungseinrichtung 21 werden die Signale der Detektoreinrichtung 10, 10' weiterverarbeitet und zu den Ausgangssignalen 17, 18 aufbereitet.

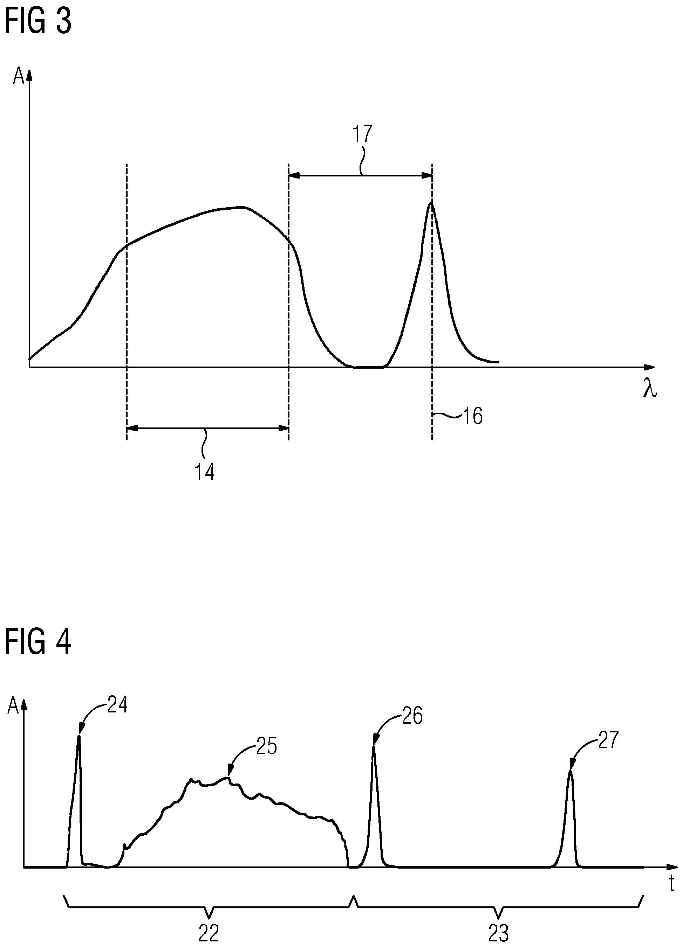

In Figur 4 ist ein Signalverlauf über die Zeit dargestellt, wenn die Lichtquelleneinrichtung 8 das Licht synchronisiert in das Faserelement 6 einleitet. Synchronisiert bedeutet hier, dass nacheinander beispielsweise zunächst Licht des zweiten Frequenzbereichs 16 und anschließend Licht des ersten Frequenzbereichs 14 in das Faserelement 6 eingeleitet wird. Insbesondere wird in Figur 4 in einem ersten Zeitraum 22 Licht des zweiten Frequenzbereichs 16, das für Fiber Optic Sensing optimiert ist, ausgesendet und in einem zweiten Zeitraum 23, der dem ersten Zeitraum 22 folgt, Licht des ersten Frequenzbereichs 14, das für den oder die Bragg-Spiegel 7 optimiert ist, ausgesendet. Bei der Darstellung in Figur 4 zeigt eine erste Signalspitze 24 das ausgesendete Licht des zweiten Frequenzbereichs 16 für Fiber Optic Sensing und die folgende Signalerhöhung 25, das durch das Faserelement 6 zurückgeworfene Licht nach den Prinzipien von Fiber Optic Sensing. Die Signalspitze 24 und Signalerhöhung 25 befinden sich im ersten Zeitraum 22. Im zweiten Zeitraum 23 ist zunächst die Emmission des Lichts des ersten Frequenzbereichs 14 für den Bragg-Spiegel 7 anhand einer Signalspitze 26 zu erkennen. Zeitlich beabstandet folgt eine weitere Signalspitze 27, die das reflektierte Licht durch den Bragg-Spiegel 7 als Folge der Emission mit der Signalspitze 26 folgt.

Die beiden Frequenzbereiche 14, 16 und deren Abstand 17 zueinander sind in Figur 3 dargestellt.

Die Erfassung von Signalen mit Hilfe der Bragg Spiegel ist von Natur aus eher eine permanente Messung, da sie eine definierte Quelle für die Reflektion hat. Bei der Verwendung von Fiber Optic Sensing ist dagegen keine definierte Quelle für die Reflektion notwendig, hier sind die Reflexionspunkte letztendlich auf Produktionsfehler zurückzuführen, die sich über die ganze optische Faser erstrecken. Daher verfügen die Detektoreinrichtung und/oder Lichtquelleneinrichtung für Fiber Optic Sensing über eine zeitliche Auflösung, sodass über die zeitliche Auflösung eine räumliche Zuordnung stattfinden kann. Es wird bei der erfindungsgemäßen Lösung der Nachteil der reinen Fiber Optic Sensing Methode eliminiert, dass senkrecht zur optischen Faser keine räumliche Auflösung stattfinden kann.

## Patentansprüche

1. Sensoreinrichtung (5) für eine eisenbahntechnische Anlage (1),
mit wenigstens einem zur Leitung von Licht geeignetem Faserelement, das wenigstens einen zur Reflexion von Licht mit einem ersten Frequenzbereich (14) ausgebildeten Bragg-Spiegel (7) aufweist,
mit wenigstens einer Lichtquelleneinrichtung (8), die zum Einleiten von Licht des ersten Frequenzbereichs (14) in das wenigstens eine Faserelement (6) ausgebildet ist, und
mit wenigstens einer Detektoreinrichtung (10), die zum Erfassen von reflektiertem Licht ausgebildet ist,
wobei die wenigstens eine Lichtquelleneinrichtung (8) zum Einleiten von Licht in das Faserelement (6) mit wenigstens einem zweiten Frequenzbereich (16) ausgebildet ist, der für Fiber Optic Sensing geeignet ist,
**dadurch gekennzeichnet, dass**
die Sensoreinrichtung (5) wenigstens einen mit dem wenigstens einen Bragg-Spiegel (7) verbundenen Permanentmagneten (11) aufweist, der so im Bereich einer Schiene (2) der eisenbahntechnischen Anlage (1) anbringbar ist, dass sich der Permanentmagnet durch eine Vorbeibewegung eines Rades (4) eines Fahrzeugs (3) der eisenbahntechnischen Anlage (1) mechanisch verändert.

2. Sensoreinrichtung (5) nach Anspruch 1,
**dadurch gekennzeichnet, dass**
das Faserelement (6) wenigstens zwei in einer Längsrichtung des Faserelements (6) hintereinander angeordnete Bragg-Spiegel (7) aufweist.

3. Sensoreinrichtung (5) nach Anspruch 1 oder 2,
**dadurch gekennzeichnet, dass**
sich die wenigstens zwei Frequenzbereiche (14, 16) nicht überlagern und einen Abstand zueinander aufweisen.

4. Sensoreinrichtung (5) nach einem der oben genannten Ansprüche,
**dadurch gekennzeichnet, dass**
die Lichtquelleneinrichtung (8) zum synchronisierten Einleiten von Licht der zwei Frequenzbereiche (14, 16) ausgebildet ist.

5. Sensoreinrichtung (5) nach einem der oben genannten Ansprüche,
**dadurch gekennzeichnet, dass**
die Lichtquelleneinrichtung (8) wenigstens zwei Lichtquellen (9) aufweist, wobei die eine Lichtquelle (9) für die Einleitung von Licht des ersten Frequenzbereichs (14) und die andere Lichtquelle (9) für die Einleitung von Licht des zweiten Frequenzbereichs (16) ausgebildet ist.

6. Sensoreinrichtung (5) nach einem der oben genannten Ansprüche,
**dadurch gekennzeichnet, dass**
die Sensoreinrichtung (5) wenigstens zwei Detektoreinrichtungen(10) aufweist, wobei die eine Detektoreinrichtung für das Erfassen von Licht des ersten Frequenzbereichs (14) und die andere Detektoreinrichtung für das Erfassen von Licht des zweiten Frequenzbereichs (16) ausgebildet ist.

7. Sensoreinrichtung (5) nach einem der oben genannten Ansprüche,
**dadurch gekennzeichnet, dass**
die Sensoreinrichtung (5) zur Ausgabe von wenigstens zwei unterschiedlichen Ausgangssignalen (17, 18) ausgebildet ist,
wobei das eine Ausgangssignal (17) für sicherheitsrelevante Informationen und das andere Ausgangssignal (18) für nicht-sicherheitsrelevante Informationen ausgebildet ist.

8. Sensoreinrichtung (5) nach einem der oben genannten Ansprüche,
**dadurch gekennzeichnet, dass** die Lichtquelleneinrichtung (8) und die Detektoreinrichtung (10) in einem gemeinsamen Gehäuse integriert ausgebildet sind.

9. Eisenbahntechnische Anlage
mit einer zwei Schienen (2) aufweisenden Fahrstrecke und mit wenigstens einer zumindest teilweise entlang der Fahrstrecke verlaufenden Sensoreinrichtung (5),
**dadurch gekennzeichnet, dass** die Sensoreinrichtung (5) nach einem der oben genannten Ansprüche ausgebildet ist.

10. Verfahren zum Erfassen von Informationen in einer eisenbahntechnischen Anlage (1),
bei dem Licht wenigstens eines ersten Frequenzbereichs (14) in wenigstens ein Faserelement (6) eingeleitet wird, wobei das Faserelement (6) für die Leitung von Licht geeignet ist und wenigstens einen zur Reflexion von Licht mit dem ersten Frequenzbereich (14) ausgebildeten Bragg-Spiegel (7) aufweist,
bei dem von dem Faserelement (6) reflektiertes Licht erfasst wird, und
Licht mit wenigstens einem zweiten Frequenzbereich (16) eingeleitet wird, der für Fiber Optic Sensing geeignet ist,
**dadurch gekennzeichnet, dass**
die eisenbahntechnische Anlage (1) eine Sensoreinrichtung (5) mit wenigstens einem mit dem wenigstens einen Bragg-Spiegel (7) verbundenen Permanentmagneten (11) aufweist, der so im Bereich einer Schiene (2) der eisenbahntechnischen Anlage (1) angebracht ist, dass der Permanentmagnet durch eine Vorbeibewegung eines Rades (4) eines Fahrzeugs (3) der eisenbahntechnischen Anlage (1) mechanisch verformt wird, und dass ein vorbeifahrendes Rad eines Fahrzeugs (3) der eisenbahntechnischen Anlage (1) anhand einer Veränderung des durch den Bragg-Spiegel 7 reflektierten Lichts detektiert wird.

## Claims

1. Sensor device (5) for a railway system (1),
having at least one fibre element suitable for guiding light, said fibre element having at least one Bragg mirror (7) configured for reflecting light of a first frequency range (14),
with at least one light source device (8) configured for introducing light of the first frequency range (14) into the at least one fibre element (6), and
with at least one detector device (10) which is configured for detecting reflected light,
wherein the at least one light source device (8) is configured for introducing light with at least one second frequency range (16) that is suitable for fibre optic sensing into the fibre element (6),
**characterised in that**
the sensor device (5) has at least one permanent magnet (11) that is connected to the at least one Bragg mirror (7) and can be mounted in the region of a rail (2) of the railway system (1) such that the permanent magnet changes mechanically due to a passage of a wheel (4) of a vehicle (3) of the railway system (1).

2. Sensor device (5) according to claim 1,
**characterised in that**
the fibre element (6) has at least two Bragg mirrors (7) arranged one behind the other in a longitudinal direction of the fibre element (6).

3. Sensor device (5) according to claim 1 or 2,
**characterised in that**
the at least two frequency ranges (14, 16) do not overlap and have a spacing from one another.

4. Sensor device (5) according to one of the preceding claims, **characterised in that**
the light source device (8) is configured for synchronised introduction of light of the two frequency ranges (14, 16).

5. Sensor device (5) according to one of the preceding claims, **characterised in that**
the light source device (8) has at least two light sources (9), wherein one light source (9) is configured for introducing light of the first frequency range (14) and the other light source (9) is configured for introducing light of the second frequency range (16).

6. Sensor device (5) according to one of the preceding claims, **characterised in that**
the sensor device (5) has at least two detector devices (10),
wherein one detector device is configured for detecting light of the first frequency range (14) and the other detector device is configured for detecting light of the second frequency range (16).

7. Sensor device (5) according to one of the preceding claims, **characterised in that**
the sensor device (5) is configured for the output of at least two different output signals (17, 18), wherein one output signal (17) is configured for safety-relevant information items and the other output signal (18) is configured for non-safety-relevant information items.

8. Sensor device (5) according to one of the preceding claims, **characterised in that**
the light source device (8) and the detector device (10) are configured integrated into a common housing.

9. Railway system
with a track having two rails (2) and with at least one sensor device (5) extending at least partially along the track,
**characterised in that**
the sensor device (5) is configured according to one of the preceding claims.

10. Method for detecting information items in a railway system (1),
wherein light of at least one first frequency range (14) is introduced into at least one fibre element (6), wherein the fibre element (6) is suitable for guiding light and has at least one Bragg mirror (7) configured for reflecting light of the first frequency range (14),
wherein light reflected by the fibre element (6) is detected, and
light of at least a second frequency range (16) that is suitable for fibre optic sensing is introduced,
**characterised in that**
the railway system (1) has a sensor device (5) with at least one permanent magnet (11) that is connected to the at least one Bragg mirror (7) and is mounted in the region of a rail (2) of the railway system (1) such that the permanent magnet is deformed mechanically due to a passage of a wheel (4) of a vehicle (3) of the railway system (1), and that a passing wheel of a vehicle (3) of the railway system (1) is detected on the basis of a change in the light reflected by the Bragg mirror 7.

## Revendications

1. Dispositif (5) capteur pour une installation (1) de la technique des chemins de fer,
comprenant au moins un élément de fibre, qui est propre à conduire de la lumière et qui a au moins un miroir (7) de Bragg constitué pour la réflexion de la lumière d'un premier domaine (14) de fréquence,
comprenant au moins un dispositif (8) de source lumineuse, qui est constitué pour introduire de la lumière du premier domaine (14) de fréquence dans le au moins un élément (6) de fibre, et
comprenant au moins un dispositif (10) détecteur, qui est constitué pour la détection de lumière réfléchie,
dans lequel le au moins un dispositif (8) de source lumineuse est constitué pour l'introduction dans l'élément (6) de fibre de lumière d'au moins un deuxième domaine (16) de fréquence, qui est approprié à un fiber optic sensing,
**caractérisé en ce que**
le dispositif (5) capteur a au moins un aimant (11) permanent, qui est relié au miroir (7) de Bragg et qui peut être monté dans la zone d'un rail (2) de l'installation (1) de la technique des chemins de fer, de telle façon que l'aimant permanent soit modifié mécaniquement par le passage d'une roue (4) d'un véhicule (3) de l'installation (1) de la technique des chemins de fer.

2. Dispositif (5) capteur suivant la revendication 1,
**caractérisé en ce que**
l'élément (6) de fibre a au moins deux miroirs (7) de Bragg montés l'un derrière l'autre dans une direction longitudinale de l'élément (6) de fibre.

3. Dispositif (5) capteur suivant la revendication 1 ou 2,
**caractérisé en ce que**
les au moins deux domaines (14, 16) de fréquence ne se superposent pas et ont une distance l'un par rapport à l'autre.

4. Dispositif (5) capteur suivant l'une des revendications précédentes,
**caractérisé en ce que**
le dispositif (8) de source lumineuse est constitué pour l'introduction synchronisée de lumière des deux domaines (14, 16) de fréquence.

5. Dispositif (5) capteur suivant l'une des revendications précédentes,
**caractérisé en ce que**
le dispositif (8) de source lumineuse a au moins deux sources (9) lumineuses, dans lequel l'une des sources (9) lumineuse est constituée pour l'introduction de lumière du premier domaine (14) de fréquence et l'autre source (9) lumineuse pour l'introduction de lumière du deuxième domaine (16) de fréquence.

6. Dispositif (5) capteur suivant l'une des revendications précédentes,
**caractérisé en ce que**
le dispositif (5) capteur a au moins deux dispositifs (10) détecteurs, dans lequel l'un des dispositifs détecteurs est constitué pour la détection de lumière du premier domaine (14) de fréquence et l'autre dispositif de détecteur pour la détection de lumière du deuxième domaine (16) de fréquence.

7. Dispositif (5) capteur suivant l'une des revendications précédentes,
**caractérisé en ce que**
le dispositif (5) capteur est constitué pour sortir au moins deux signaux (17, 18) de sortie différents, dans lequel l'un des signaux (17) de sortie est constitué pour des informations pertinentes du point de vue de la sécurité et l'autre signal (18) de sortie pour des informations non pertinentes du point de vue de la sécurité.

8. Dispositif (5) capteur suivant l'une des revendications précédentes,
**caractérisé en ce que**
le dispositif (8) de source lumineuse et le dispositif (10) détecteur sont intégrés dans un boîtier commun.

9. Installation de la technique des chemins de fer, comprenant un parcours ayant deux rails (2) et comprenant au moins un dispositif (5) capteur s'étendant au moins en partie le long du parcours,
**caractérisé en ce que**
le dispositif (5) capteur est constitué suivant l'une des revendications précédentes.

10. Procédé de détection d'informations dans une installation (1) de la technique des chemins de fer,
dans lequel on envoie de la lumière d'au moins un premier domaine (14) de fréquence dans au moins un élément (6) de fibre, dans lequel l'élément (6) de filtre est propre à conduire de la lumière et a au moins un miroir (7) de Bragg constitué pour la réflexion de lumière du premier domaine (14) de fréquence,
dans lequel on détecte de la lumière réfléchie par l'élément (6) de fibre, et
on injecte de la lumière d'au moins un deuxième domaine (16) de fréquence, qui est approprié au fiber otpic sensing,
**caractérisé en ce que**
l'installation (1) de la technique des chemins de fer a un dispositif (5) capteur ayant au moins un aimant (11) permanent relié au au moins un miroir (7) de Bragg, qui est monté dans la zone d'un rail (2) de l'installation (1) de la technique des chemins de fer, de telle façon que l'aimant permanent soit déformé mécaniquement par le passage d'une roue (4) d'un véhicule (3) de l'installation (1) de la technique des chemins de fer, et **en ce que** l'on détecte le passage d'une roue d'un véhicule (3) de l'installation (1) de la technique des chemins de fer à l'aide d'une modification de la lumière réfléchie par le miroir (7) de Bragg.
